# EUROPÄISCHE PATENTSCHRIFT

(11) **EP 3 630 697 B1**
(45) Veröffentlichungstag und Bekanntmachung des Hinweises auf die Patenterteilung: **25.01.2023**
(21) Anmeldenummer: 18726509.5
(22) Anmeldetag: 31.05.2018
(51) Int. Cl.: C04B 24/28, C08G 59/50, C08L 63/00, C08G 59/18

(54) **EINKOMPONENTIGER EPOXIDHARZ-ZEMENT-MÖRTEL**
SINGLE-COMPONENT EPOXY RESIN CEMENT MORTAR
MORTIER DE CIMENT À BASE DE RÉSINE ÉPOXY MONOCOMPOSANT

(30) Priorität: 31.05.2017 EP 17173667
(43) Veröffentlichungstag der Anmeldung: 08.04.2020
(73) Patentinhaber: Sika Technology AG, 6340 Baar (CH)
(72) Erfinder: W RMLI, Fabio, 8820 W denswil (CH); MOSER, Thomas, 8048 Z rich (CH)
(74) Vertreter: Sika Patent Attorneys
(86) Internationale Anmeldenummer: PCT/EP2018/064367
(87) Internationale Veröffentlichungsnummer: WO 2018/220133

(56) Entgegenhaltungen:
- EP-A1- 0 409 787
- EP-A1- 0 580 588
- EP-A1- 2 537 896
- DE-A1- 3 308 622
- DE-A1-102010 039 315
- US-A1- 2016 152 522

## Beschreibung

### Technisches Gebiet

Die Erfindung betrifft einkomponentige Polymer-modifizierte Zusammensetzungen die Zement enthalten, die Herstellung solcher Zusammensetzungen und ihre Verwendung als Mörtel, Estrich, Beschichtung oder Korrosionsschutz.

### Stand der Technik

Polymer-modifizierte Mörtel sind in der Baubranche bekannt.

DE 10 2010 039 315 beschreibt ein in Wasser redispergierbares Polymerpulver, enthaltend filmbildende Basispolymerisate, Additive und Schutzkolloide, zur Verbesserung der Lagerstabilität von Zement oder zementösen Trockenmörteln.

Ebenfalls bekannt sind mit Epoxidharz-modifizierter Mörtel oder Beton. Diese sind typischerweise dreikomponentige Produkte mit einer flüssigen Komponente, welche ein in Wasser emulgiertes Epoxidharz enthält, einer weiteren flüssigen Komponente, welche einen wasserverdünnbaren Härter für das Epoxidharz enthält, und einer festen Komponente, welche Zement und Zuschlagstoffe enthält. Die drei Komponenten werden in separaten Gebinden aufbewahrt und erst bei der Verarbeitung miteinander vermischt, worauf die Härtungsreaktionen des Zements und des Epoxidharzes parallel verlaufen. Derartige Epoxidharz-modifizierte Zusammensetzungen ermöglichen sehr gute Haftungen auf feuchtem Untergrund, ein gutes Wasserrückhaltevermögen und eine hohe Wasserundurchlässigkeit.

US 2016/152522 beschreibt eine mehrkomponentige Zusammensetzung umfassend eine Binderkomponente, umfassend ein Epoxidharz, eine Härterkomponente, umfassend einen Aminhärter, und eine feste Komponente, umfassend ein hydraulisches Bindemittel.

Die Tatsache, dass ein solches System dreikomponentig ist, bringt aber Nachteile mit sich. Die Handhabung von drei Komponenten ist für den Verarbeiter aufwändig und fehleranfällig und verursacht auf der Baustelle viel Abfall, da die flüssigen Komponenten in wasserfesten und stabilen Gebinden, beispielsweise Kunststoffflaschen oder Kanister, gelagert werden.

Es gab bereits Versuche, die Anzahl der Komponenten von Epoxidharz-modifizierten Mörteln zu verringern.

EP 0 409 787 beschreibt eine zementhaltige Trockenmischung, die Epoxidharz und Härter enthält, wobei das Epoxidharz und der Härter jeweils separat auf ein feines Trägermaterial aufgezogen vorliegen. Die beschriebenen Mischungen verfügen aber nicht über eine ausreichende Lagerstabilität, insbesondere bei höheren Temperaturen.

EP 0 786 439 beschreibt polymermodifizierte Fertigmischungen bei denen zwei Mischungskomponenten gemischt werden, eine enthält das Epoxidharz, Zement und ein latent hydraulisches Bindemittel, die andere den Aminhärter. Die Fertigmischungen enthaltend beide Mischungskomponenten sind schlecht lagerstabil und zeigen eine unerwünscht langsame Festigkeitsentwicklung nach dem Mischen mit Wasser.

EP 0 580 588 beschreibt einen trockenen Zementmörtel der Zement, Aggregate, Reaktivharz und Härter enthält. Der Härter wird in Form eines Reaktionsproduktes mit einer organischen Säure oder einem funktionellen Derivat davon, dem Mörtel zugegeben.

DE 3308622 zeigt ein Verfahren für eine Reaktionsharz-Härter-Zubereitung bei dem Harz und Härter separat versprüht werden und an die Oberfläche der Tröpfchen ein staubförmiges Material angelagert wird. In einem weiteren in DE 3308622 beschriebenen Verfahren werden Harz und Härter als flüssige Mischung zur Reaktion gebracht und vor Ende der Härtung wird eine organische Säure zugegeben um die noch freien reaktiven Gruppen des Härters zu blockieren. WO 2010/086217 beschreibt eine Polymerpulverzusammensetzung, die ein Epoxidharz enthält. Die bevorzugte Anwendung ist in zementfreien oder zementarmen Systemen, welche teuer sind und die Anforderungen an einen Epoxidharz-modifizierten Zementmörtel bei weitem nicht erfüllen.

EP 2 537 897 zeigt die Verwendung eines Polymerpulvers aus Epoxidharz, einem Vinylester-Polymer und einem Tensid in zementösen Mischungen ohne Verwendung eines Härters für das Epoxidharz.

EP 2 537 896 beschreibt ein in Wasser redispergierbares Polymerpulver das ein hitzehärtbares Epoxidharz, einen kolloidalen Stabilisator und einen Grenzflächenvernetzer enthält.

Aminhärter freie Epoxidharz-Systeme brauchen zur Aushärtung des Epoxidharzes entweder erhöhte Temperaturen, was auf Baustellen nur mit grossem Aufwand möglich ist, oder sie härten nur sehr langsam und/oder ungenügend aus, wodurch die hohen Anforderungen an einen Epoxidharz-modifizierten Zementmörtel ebenfalls nicht erfüllt werden.

Es besteht deshalb weiterhin der Bedarf nach einem hochwertigen Epoxidharz-modifizierten Mörtel mit guter Lagerstabilität und vereinfachter Handhabung.

### Darstellung der Erfindung

Aufgabe der vorliegenden Erfindung ist es daher, eine lagerstabile, einkomponentige Mörtelzusammensetzung die Verbindungen mit Epoxidgruppen enthält, zur Verfügung zu stellen, die nach dem Mischen mit Wasser gute Verarbeitungs- und Endeigenschaften aufweist.

Überraschenderweise wird diese Aufgabe durch eine Zusammensetzung wie in Anspruch 1 beschrieben gelöst.

Die Zusammensetzung ist einkomponentig, das heisst, sie ist bei geeigneter Aufbewahrung lagerstabil und muss nur noch mit Wasser gemischt werden, was im Vergleich zu den dreikomponentigen Epoxidharz-modifizierten Mörteln nach dem Stand der Technik besonders vorteilhaft ist. Es fallen weniger Kosten für Logistik, Lagerhaltung und Transport an, die Verarbeitung ist einfacher, schneller und weniger fehleranfällig und auf der Baustelle entsteht massiv weniger Abfall. Eine Fehldosierung der Komponenten, insbesondere wenn nur ein Teil des vordosiert abgepackten Materials verwendet wird, ist bei der einkomponentigen Zusammensetzung ausgeschlossen. Überraschenderweise ist die Zusammensetzung sehr lagerstabil, obwohl Epoxidgruppen und Aminhärter zusammen in einer Komponente vorhanden sind. Dabei erhöht die Anwesenheit des Polymers **P** überraschenderweise die Lagerstabilität der Zusammensetzung. Die erfindungsgemässen Zusammensetzungen ermöglichen besonders gute Haftungseigenschaften und Festigkeiten, hohe Wasserdichtheit, eine besonders schnelle Überschichtbarkeit und gute chemische Beständigkeiten.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung,wie in den vorliegenden Ansprüchen beschrieben, umfassend
- mindestens einen Zement,
- mindestens einen anorganischen Füllstoff,
- mindestens ein Pulver umfassend mindestens ein Polymer **P**,
- mindestens eine Verbindung enthaltend Epoxidgruppen,
- wobei die mindestens eine Verbindung enthaltend Epoxidgruppen identisch oder unterschiedlich ist mit dem Polymer **P**, und
- mindestens ein Amin mit mindestens drei gegenüber Epoxidgruppen reaktiven Aminwasserstoffen.

Die Zusammensetzung enthält mehr als 10 Gewichts-% Zement und liegt bei Raumtemperatur als lagerstabiles rieselfähiges Pulver und/oder Granulat vor.

Als "lagerstabil" wird eine Zusammensetzung bezeichnet, welche bei Lagerung über einen Zeitraum von mindestens einem Monat, bevorzugt mindestens 3 bis zu 6 Monaten und länger, in einem geeigneten Gebinde bei bestimmungsgemässer Verwendung ohne Einschränkungen anwendbar bleibt.

Unter "Raumtemperatur" wird in diesem Dokument eine Temperatur von 21°C verstanden.

Unter "redispergierbarem Polymerpulver" wird in diesem Dokument ein Pulver verstanden, das ein Polymer enthält, welches nach Einbringen in Wasser eine stabile Dispersion bildet. Der Begriff "redispergierbares Polymerpulver" umfasst nicht nur das Polymer selbst, sondern auch dessen Mischung mit Schutzkolloiden, Emulgatoren und Trägermaterial.

Als Zement kann jeder verfügbare Zementtyp oder eine Mischung von zwei oder mehreren Zementtypen verwendet werden, beispielsweise die unter der DIN EN 197-1 klassifizierten Zemente: Portlandzement (CEM I), Portlandkompositzement (CEM II), Hochofenschlackezement (CEM III), Pozzolanischer Zement (CEM IV) und Kompositzement (CEM V). Selbstverständlich sind Zemente, die gemäss einem alternativen Standard, wie beispielsweise dem ASTM-Standard oder dem indischen Standard, produziert werden, gleichermassen geeignet.

Besonders bevorzugt ist ein Zement gemäss Euronorm EN 197-1, ein Calciumsulfoaluminatzement, ein Calciumaluminatzement, oder Mischungen davon, gegebenenfalls in einer Mischung mit Calciumsulfat.

Am meisten bevorzugt ist Portlandzement oder ein Zement enthaltend Portlandzement gemäss EN 197-1. Portlandzement ist besonders einfach verfügbar und ermöglicht Mörtel mit guten Eigenschaften.

Speziell geeignet sind auch Mischungen aus Zement, Calciumaluminatzement und Calciumsulfat oder aus Zement und Calciumsulfoaluminatzement. Solche Bindemittelmischungen ermöglichen kurze Abbindezeiten und hohe Frühfestigkeiten.

Bevorzugt ist die Zusammensetzung frei von latent hydraulischen Bindemitteln da die Reaktion mit Wasser und damit die Festigkeitsentwicklung dieser Bindemittel nur sehr langsam erfolgt.

Der Anteil an Zement in der Zusammensetzung beträgt mehr als 10 Gewichts-%, bevorzugt mehr als 15 Gewichts-%, besonders bevorzugt mehr als 18 Gewichts-%, bezogen auf 100 Gewichts-% der trockenen Zusammensetzung. Besonders bevorzugt enthält die Zusammensetzung 11 bis 45 Gewichts-%, mehr bevorzugt 15 bis 40 Gew.-%, am meisten bevorzugt 18 bis 40 Gewichts-%, Zement.

Eine solche Menge Zement ermöglicht eine besonders hohe Festigkeit der ausgehärteten Zusammensetzung.

Die Zusammensetzung enthält neben Zement mindestens einen anorganischen Füllstoff. Füllstoffe sind chemisch inerte, feste, partikuläre Materialien und werden in verschiedenen Formen, Grössen und als unterschiedliche Materialien angeboten. Sie können von feinen Sandpartikeln bis zu grossen groben Steinen variieren. Besonders geeignete Füllstoffe sind Sand, Kies, zerkleinerte Steine, kalzinierte Kiesel oder leichte Füllstoffe, wie insbesondere Ton, Bimsstein, Perlit oder Vermiculit. Weitere geeignete Füllstoffe sind Aluminiumoxid, Calciumcarbonat, Fasern oder amorphes Siliziumdioxid (Silicafume).

Vorzugsweise umfasst der Füllstoff Sand, insbesondere Quarzsand. Dies ermöglicht eine besonders gute Verarbeitbarkeit der Zusammensetzung und eine schöne, ebene Oberfläche nach der Aushärtung.

Die Partikelgrösse der Füllstoffe ist bevorzugt weniger als 5 mm.

Die Füllstoffe weisen insbesondere eine Partikelgrösse im Bereich von 0.1 µm bis 3.5 mm auf, wobei Sand, insbesondere Quarzsand, besonders bevorzugt ist. Die Partikelgrösse kann mit Hilfe einer Siebanalyse bestimmt werden. Die optimale Partikelgrösse richtet sich nach der Anwendung.

Bevorzugt ist der Anteil an anorganischem Füllstoff in der Zusammensetzung 40 Gewichts-% oder mehr, mehr bevorzugt 40 bis 85 Gewichts-%, bezogen auf 100 Gewichts-% der trockenen Zusammensetzung.

Die Zusammensetzung enthält weiterhin mindestens ein Pulver umfassend mindestens ein Polymer **P.** Typischerweise ist das Polymer **P** bei Raumtemperatur fest.

Bevorzugt ist das Pulver enthaltend das Polymer **P** ein in Wasser redispergierbares Polymerpulver. Ein solches wird bevorzugt erhalten durch Trocknen, insbesondere durch Sprühtrocknen, einer wässrigen Dispersion enthaltend mindestens ein Polymer **P.**

Das Polymer **P** ist dabei bevorzugt ein durch radikalische Polymerisation in Wasser hergestelltes organisches Polymer. Typischerweise erfolgt die Polymerisation als Dispersions-Polymerisation in Gegenwart von Emulgatoren und/oder wasserlöslichen Schutzkolloiden, insbesondere Polyvinylalkohol.

Wird die radikalische Polymerisation zur Herstellung des Polymers **P** in Gegenwart von Schutzkolloiden und/oder Emulgatoren durchgeführt, so enthalten die erhaltene Polymerdispersion und das daraus durch Trocknen erhaltene Pulver ebenfalls diese Schutzkolloide und/oder Emulgatoren.

Dabei können die Schutzkolloide und/oder Emulgatoren die Redispersionseigenschaften des Pulvers verbessern.

Das Polymer **P** enthält bevorzugt Styrol, Ethylen, Butadien, Acrylester, Vinylchlorid, Vinylidenchlorid oder Vinylacetat als Monomerbausteine. Besonders geeignet ist ein Polymer **P,** welches ein Copolymer enthaltend die Monomerbausteine Styrol und Acrylester, insbesondere Styrol und Butylacrylat umfasst.

Das Polymer **P** hat bevorzugt eine minimale Filmbildungstemperatur (MFT) von 25°C oder darunter, mehr bevorzugt unter 19°C. Solche Polymere bilden, wenn sie als Dispersion vorliegen, bei oder unter der MFT durch Koagulieren Filme. Diese Filmbildung erfolgt insbesondere dann, wenn die Dispersion austrocknet. Eine tiefe MFT ist von Vorteil, besonders bei kühleren Temperaturen.

Bevorzugt enthält die Zusammensetzung 0.5 bis 20, mehr bevorzugt 2.5 bis 18, noch mehr bevorzugt 3.2 bis 15, Gewichts-% Polymer **P**, bezogen auf 100 Gewichts-% der trockenen Zusammensetzung.

In einer bevorzugten Ausführungsform wird der das Polymer **P** enthaltenden Dispersion vor, während oder nach der Sprühtrocknung ein inertes anorganisches Trägermaterial und/oder Schutzkolloide zugegeben. Dadurch kann die Rieselfähigkeit des Pulvers und/oder die Redispergierbarkeit des Pulvers verbessert werden.

Als "anorganisches Trägermaterial" wird dabei ein feines anorganisches Pulver bezeichnet. Dieses kann mit weicheren oder flüssigen Bestandteilen gemischt werden, um ein rieselfähiges Pulver zu erhalten.

Das anorganische Trägermaterial ist bevorzugt ein feines Pulver mit einer spezifischen Oberfläche von 0.1 bis 500 m²/g und/oder mit einer Teilchengrösse im Bereich von 10 nm bis 10 µm. Bevorzugt ist das anorganische Trägermaterial inert, das bedeutet, dass es nicht mit den Materialien, denen es zugesetzt wird, reagiert. Solche Pulver sind bevorzugt Ca- oder Mg-Carbonat, Dolomit, Quarzmehl, amorphes Siliziumdioxid, Bimsstein, Titandioxid, Aluminiumsilikat, Talkum, Glimmer, Kieselgur, Gips, Tonerde, Kaoline, Metakaoline, Magnesit, Schiefermehl, Gesteinsmehl oder Gemische davon. Speziell bevorzugt sind Calciumcarbonat, Dolomit, amorphes Siliziumdioxid, Ton oder Mischungen davon.

Bevorzugte Schutzkolloide sind insbesondere teilverseifte oder vollverseifte Polyvinylalkohole, Polyvinylpyrrolidone, Polyvinylacetale, Polysaccharide in wasserlöslicher Form wie Carboxymethyl-, Methyl-, Hydroxyethyl-, Hydroxypropyl-Cellulosen, Proteine wie Casein oder Caseinat, Sojaprotein oder Gelatine. Besonders bevorzugt sind teilverseifte Polyvinylalkohole mit einem Hydrolysegrad im Bereich von 80 bis 95 mol-%.

In einer bevorzugten Ausführungsform ist die Verbindung enthaltend Epoxidgruppen identisch mit dem Polymer **P** und stellt ein Copolymer mit kovalent gebundenen Epoxidgruppen dar.

Ein solches Polymer ist durch radikalische Polymerisation von mindestens einem Monomeren, das Epoxidgruppen trägt, herstellbar. Bevorzugt ist ein solches Monomer ausgewählt aus der Gruppe bestehend aus Glycidylacrylat, Glycidylmethacrylat, Allylglycidylether und Mischungen davon.

Bevorzugt enthält das Polymer neben dem Epoxidgruppen-tragenden Monomer noch weitere Monomere, insbesondere ausgewählt aus Styrol, Ethylen, Butadien, Acrylester, Vinylchlorid, Vinylidenchlorid Vinylacetat und Mischungen davon.

Speziell bevorzugt ist das Polymer enthaltend kovalent gebundene Epoxidgruppen herstellbar durch radikalische Copolymerisation von Styrol, Alkylacrylat, insbesondere Butylacrylat, und Glycidylmethacrylat.

Bevorzugt wird das Polymer **P** mit kovalent gebundenen Epoxidgruppen durch radikalische Dispersions-Polymerisation in Wasser, gegebenenfalls in Gegenwart von Emulgatoren und/oder wasserlöslichen Schutzkolloiden, hergestellt. Bevorzugt wird die so erhaltene Polymerdispersion sprühgetrocknet, um das Pulver umfassend das Polymer **P** zu erhalten. Optional können vor, während oder nach der Sprühtrocknung ein inertes anorganisches Trägermaterial und/oder Schutzkolloide zugegeben werden.

Das Polymer **P** mit kovalent gebundenen Epoxidgruppen hat bevorzugt einen Epoxidwert im Bereich von 0.5 bis 3.0, mehr bevorzugt 0.8 bis 2.5, besonders bevorzugt 1.0 bis 2.0, mmol Epoxidgruppen pro g Polymer **P.**

Bevorzugt liegt das Polymer **P** mit kovalent gebundenen Epoxidgruppen als in Wasser redispergierbares Pulver vor und hat eine minimale Filmbildungstemperatur (MFT) von ≤ 25°C, mehr bevorzugt ≤ 19°C.

Ein solches Polymer, das filmbildende Eigenschaften und kovalent gebundene Epoxidgruppen aufweist, kann überraschenderweise gut mit üblichen Aminhärtern aushärten und dabei die Dauerhaftigkeit, insbesondere die Festigkeit und chemische Beständigkeit, und die Wasserdichtheit von Mörteln verbessern.

In einer weiteren bevorzugten Ausführungsform ist die Verbindung enthaltend Epoxidgruppen nicht identisch mit dem Polymer **P** und stellt ein Epoxidharz dar.

Jedes Epoxidharz ist geeignet, sofern es in Wasser emulgiert oder dispergiert werden kann und mit üblichen Aminhärtern bei Umgebungstemperaturen, insbesondere bei Temperaturen im Bereich von 5 bis 35°C, reagieren kann. Bevorzugt ist das Epoxidharz ein Epoxid-Flüssigharz.

Bevorzugt ist ein Epoxidharz mit einer Glasumwandlungstemperatur von ≤ 25°C.

Insbesondere bevorzugt sind Epoxidharze basierend auf Bisphenol-A- oder Bisphenol-F- oder Bisphenol-A/F-Diglycidylethern.

Das Epoxidharz kann zusätzlich mindestens einen Reaktivverdünner enthalten, insbesondere Glycidylether von Mono-oder Polyhydroxyphenolen oder aliphatischen oder cycloaliphatischen Alkoholen.

Das Epoxidharz kann weiterhin Emulgatoren, insbesondere nichtionische Emulgatoren, enthalten. Dadurch wird die Emulgierbarkeit bei der Verarbeitung der Zusammensetzung verbessert.

Bevorzugt enthält die Zusammensetzung 0.1 bis 7, mehr bevorzugt 0.5 bis 5, besonders bevorzugt 0.7 bis 2.5, Gewichts-% Epoxidharz, bezogen auf 100 Gewichts-% der trockenen Zusammensetzung.

Überraschend hat sich gezeigt, dass durch die Kombination von Epoxidharz mit einem Polymer **P** das Epoxidharz migrationsfest und lagerstabil in die Zusammensetzung eingebracht werden kann.

Das Epoxidharz liegt bevorzugt in einer innigen Mischung mit dem Polymer **P** vor. Bevorzugt enthält diese Mischung noch anorganisches Trägermaterial und/oder wasserlösliches Schutzkolloid.

Bevorzugt enthält das Polymer **P** keine kovalent gebundenen Epoxidgruppen, wenn es mit einem Epoxidharz gemischt vorliegt. Bevorzugt liegt dieses Polymer **P** als Pulver vor und ist redispergierbar in Wasser und hat eine minimale Filmbildungstemperatur (MFT) ≤ 25°C oder darunter, mehr bevorzugt ≤ 19°C.

Solche Mischungen lassen sich bei Kontakt mit Wasser gut dispergieren. Dabei ermöglicht das Polymer **P** überraschenderweise eine besonders gute Lagerstabilität der Zusammensetzung und ermöglicht besonders gute Haftungseigenschaften und Festigkeiten, eine besonders schnelle Überschichtbarkeit, eine hohe Wasserdichtheit und besonders hohe chemische Beständigkeiten.

Das Gewichtsverhältnis von Epoxidharz zu Polymer **P** liegt bevorzugt im Bereich von 1:1 bis 1:10, besonders bevorzugt 1:3 bis 1:8.

Bevorzugt weist die Mischung aus Epoxidharz und Polymer **P** einen Epoxidwert im Bereich von 0.5 bis 3.0, mehr bevorzugt 0.8 bis 2.5, besonders bevorzugt 0.8 bis 1.5, mmol Epoxidgruppen pro g Polymer **P** auf.

Eine solche Mischung stellt insbesondere ein redispergierbares Pulver dar und ist bevorzugt in einer Menge von 0.6 bis 20, mehr bevorzugt 4 bis 16, Gewichts-% in der Zusammensetzung vorhanden, bezogen auf 100 Gewichts-% der trockenen Zusammensetzung.

Die innige Mischung von Epoxidharz und Polymer **P** kann durch Mischen des Pulvers umfassend ein Polymer **P** mit dem Epoxidharz, gegebenenfalls zusammen mit Trägermaterial und/oder einem Schutzkolloid, in geeigneten Mischern hergestellt werden.

Bevorzugt wird die innige Mischung von Epoxidharz und Polymer **P** erhalten, indem eine wässrige Dispersion enthaltend das Polymer **P** mit dem Epoxidharz vermischt und dann sprühgetrocknet wird. Eine solche Mischung ist besonders lagerstabil.

Optional können vor, während oder nach der Sprühtrocknung noch inertes anorganisches Trägermaterial und/oder Schutzkolloide eingemischt werden. Dabei ist ein anorganisches Trägermaterial bevorzugt in Mengen von bis zu 50, mehr bevorzugt bis zu 30, noch mehr bevorzugt bis zu 20, Gewichtsteilen bezogen auf 100 Gewichtsteile der wasserfreien Mischung aus Epoxidharz und Polymer **P** vorhanden.

In solch einer Menge bewirkt das anorganische Trägermaterial eine speziell gute Lagerstabilität der Zusammensetzung.

Vorteilhaft wird eine Vormischung enthaltend das Epoxidharz und das Pulver umfassend ein Polymer **P** zubereitet, bevor diese der Zusammensetzung zugegeben wird. Diese Vormischung ist bevorzugt frei von Verbindungen, die als Härter mit dem Epoxidharz reagieren können.

So hergestellte Mischungen lassen sich in Wasser besonders gut dispergieren und sind in der Zusammensetzung besonders lagerstabil, ohne zu verklumpen.

Das Amin mit mindestens drei gegenüber Epoxidgruppen reaktiven Aminwasserstoffen wirkt in der Zusammensetzung als Härter für Epoxidgruppenhaltige Verbindungen nach dem Vermischen der Zusammensetzung mit Wasser.

Als Aminwasserstoffe werden Wasserstoffatome bezeichnet, die direkt an ein Amin-Stickstoffatom gebunden sind und mit Epoxidgruppen reagieren können. Bevorzugt liegen die mindestens drei reaktiven Aminwasserstoffe als freie Amine vor, insbesondere liegen sie nicht als Salze einer organischen oder anorganischen Säure vor.

Salze von Aminen setzen die Säure frei, sobald die Zement enthaltende Zusammensetzung mit Wasser vermischt wird. Dies kann zu unerwünschten Nebeneffekten, wie schlechter Verarbeitbarkeit oder Verzögerung des Abbindens, führen.

Bevorzugt ist das Amin mit mindestens drei gegenüber Epoxidgruppen reaktiven Aminwasserstoffen ein wasserverdünnbares Amin oder ein Bestandteil einer wasserverdünnbaren Aminmischung.

Eine geeignete wasserverdünnbare Aminmischung umfasst dabei insbesondere eine Mischung von (i) Di-oder Polyaminen, (ii) Polyalkylenaminen und (iii) Amin-funktionalisierten Addukten von Aminen mit Epoxiden.

Der Begriff "wasserverdünnbar" bedeutet, dass eine Flüssigkeit, wenn sie mit Wasser gemischt wird, eine homogene Mischung ohne Phasentrennung bildet.

Bevorzugt enthält die Zusammensetzung eine wasserverdünnbare Aminmischung, welche mindestens ein Amin-Epoxid-Addukt mit mindestens drei Aminwasserstoffen umfasst.

Bevorzugt enthält die Zusammensetzung 0.05 bis 6 Gewichts-%, mehr bevorzugt 0.3 bis 4 Gewichts-%, am meisten bevorzugt 0.5 bis 3.5 Gewichts-%, Amin, bezogen auf 100 Gewichts-% der trockenen Zusammensetzung.

Eine besonders bevorzugte wasserverdünnbare Aminmischung enthält
- mindestens ein Amin-Epoxid-Addukt der Formel (I),
- mindestens ein Amin-Epoxid-Addukt der Formel (II),
- mindestens ein Amin-Epoxid-Addukt der Formel (III) und
- mindestens ein Amin mit zwei primären Aminogruppen, welches frei ist von weiteren Aminogruppen und Ethergruppen, 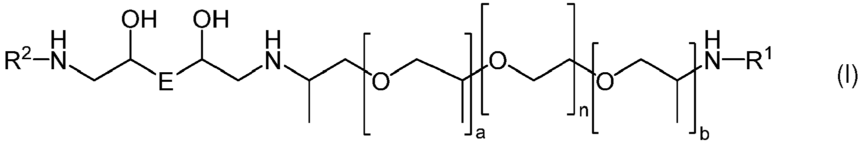 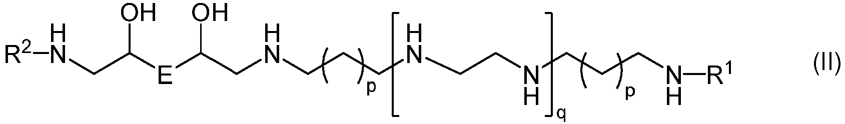 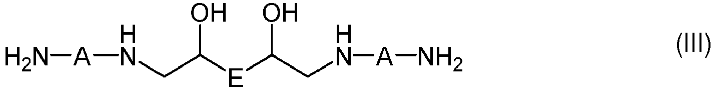 wobei
   a für eine ganze Zahl von 0 bis 10, b für eine ganze Zahl von 1 bis 10, n für eine ganze Zahl von 5 bis 50 und die Summe (a+b) für eine ganze Zahl von 1 bis 10 stehen,
   p für 0 oder 1 und q für 0, 1 ,2 oder 3 steht,
   E für den Rest eines Diepoxids nach Entfernung der beiden Epoxidgruppen steht,
   R¹ für einen einwertigen organischen Rest mit einem Molekulargewicht im Bereich von 15 bis 150 g/mol, insbesondere für Pent-3-en-2-on-4-yl oder Hex-4-en-2-on-5-yl oder Benzyl, steht,
   R² für einen einwertigen organischen Rest mit einem Molekulargewicht im Bereich von 100 bis 280 g/mol, insbesondere für Octyl, 2-Ethylhexyl, Nonyl, Decyl, C₁₂ bis C₁₈-Alkyl oder C₁₂ bis C₁₈- Alkylaminopropyl, steht, und
   A für einen zweiwertigen organischen Rest mit einem Molekulargewicht im Bereich von 28 bis 500 g/mol, insbesondere für einen Polyoxypropylen-Rest mit einem Molekulargewicht im Bereich von 180
   bis 500 g/mol, steht.

Eine solche wasserverdünnbare Aminmischung ist speziell geeignet für die Aushärtung einer Zusammensetzung umfassend Zement, anorganische Füllstoffe, Pulver umfassend mindestens ein Polymer **P** und mindestens eine Verbindung enthaltend Epoxidgruppen, nach dem Mischen mit Wasser.

Das Amin oder die Aminmischung kann durch Aufsprühen oder Einmischen direkt in die Zusammensetzung eingebracht werden.

In einer bevorzugten Ausführungsform ist das Amin auf ein anorganisches Trägermaterial aufgebracht. Bevorzugt ist das Trägermaterial ein feines anorganisches Pulver, wie vorgängig beschrieben, insbesondere ein Silikat, Siliziumdioxid oder eine Mischung davon.

Das Amin oder die Aminmischung kann in beliebiger Weise auf das Trägermaterial aufgebracht werden, insbesondere durch Aufsprühen oder Vermischen.

Das Amin oder die Aminmischung kann insbesondere in konzentrierter Lösung aus Wasser oder einem Lösungsmittel mit dem Trägermaterial in Kontakt gebracht werden und die Mischung anschliessend vollständig oder teilweise getrocknet werden.

Nach dem Aufbringen auf das Trägermaterial liegt das Amin oder die Aminmischung insbesondere als Pulver vor und ist somit besonders geeignet um in die Zusammensetzung eingemischt zu werden.

Bevorzugt wird die Mischung aus Amin und Trägermaterial mit einem flüssigen oder viskosen, hydrophoben Polymer in Kontakt gebracht. Es kann auch eine Mischung aus dem Amin mit dem hydrophoben Polymer auf das Trägermaterial aufgebracht werden. Bevorzugt ist dieses Polymer niedermolekular. Bevorzugte Polymere sind Homo- oder Copolymere von Polybutadien oder ein Styrol-Butadien-Styrol Blockcopolymer. Am meisten bevorzugt ist flüssiges Homo- oder Copolymer von Butadien.

Der Aminhärter für die Epoxidverbindung bleibt überraschend stabil in der Zusammensetzung und riecht nur minimal nach Amin, wenn er auf einem inerten Trägermaterial aufgebracht und mit einem hydrophoben Polymer behandelt ist.

In einer bevorzugten Ausführungsform wird das Amin mit Trägermaterial und optional dem hydrophoben Polymer vorgemischt, bevor es der Zusammensetzung zugegeben wird.

Bevorzugt ist eine solche Vormischung ein lagerstabiles Pulver. Dieses Pulver enthält bevorzugt 20 bis 80, mehr bevorzugt 30 bis 40, Gewichts-% anorganisches Trägermaterial, bezogen auf 100 Gewichts-% der Vormischung. Speziell bevorzugt ist eine Vormischung umfassend 20 bis 80, bevorzugt 30 bis 40, Gewichts-% Amine, 0 bis 50, bevorzugt 30 bis 40, Gewichts-% hydrophobes Polymer, insbesondere flüssiges Polybutadien, und 20 bis 80, bevorzugt 30 bis 40, Gewichts-% Trägermaterial, insbesondere amorphes Siliziumdioxid bezogen auf 100 Gewichts-% der Vormischung.

Bevorzugt weist so eine Vormischung eine Aminzahl von 100 bis 500 mg KOH/g auf.

Bevorzugt ist das Verhältnis von Epoxidgruppen zu reaktiven Aminwasserstoffen in der Zusammensetzung im Bereich von 1.5 : 1 bis 1 : 1.5. Ein solches Verhältnis ermöglicht ein gutes Aushärten des Epoxidharzes mit dem Aminhärter.

Die Zusammensetzung kann noch weitere Zusatzstoffe enthalten. Insbesondere können Mittel zur Reduktion der Schwindung zugesetzt werden. Besonders geeignete Mittel zur Reduktion der Schwindung sind Calciumsulfoaluminate und/oder Neopentylglycol. Weitere optionale Bestandteile sind Verflüssiger, Verdickungsmittel, Thixotropiermittel, Emulgatoren, Entschäumer, Luftporenbildner, Fasern, Chromatreduzierer, Farbstoffe, Pigmente, Wasserretentionsmittel, Hydrophobierungsmittel, Stellmittel, Beschleuniger und/oder Verzögerer. Neben diesen Zusatzstoffen sind auch alle anderen in der Mörtel- und Betontechnologie bekannten Zusatzstoffe als Additive möglich.

In einer bevorzugten Ausführungsform enthält die Zusammensetzung
11 bis 45 Gewichts-% Zement,
40 bis 85 Gewichts-% anorganische Füllstoffe,
0.5 bis 20 Gewichts-% Pulver umfassend mindestens ein Polymer **P,**
0.1 bis 7 Gewichts-% Epoxidharz,
0.05 bis 6 Gewichts-% Amin und
0 bis 10 Gewichts-% weitere Zusatzstoffe,
bezogen auf 100 Gewichts-% der trockenen Zusammensetzung.

In einer besonders bevorzugten Ausführungsform enthält die Zusammensetzung
18 bis 40 Gewichts-% Zement,
40 bis 85 Gewichts-% anorganische Füllstoffe,
2.5 bis 18 Gewichts-% Pulver umfassend mindestens ein Polymer **P,**
0.8 bis 5 Gewichts-% Epoxidharz,
0.5 bis 3.5 Gewichts-% Amin und
1 bis 10 Gewichts-% Zusatzstoffe ausgewählt aus der Gruppe bestehend aus Verflüssiger, Schwindreduzierer, Chromatreduzierer, Pigmente, Entschäumer, Beschleuniger, Verdicker, Schutzkolloide und Emulgatoren, bezogen auf 100 Gewichts-% der trockenen Zusammensetzung.

In einer weiteren bevorzugten Ausführungsform enthält die Zusammensetzung
11 bis 45 Gewichts-% Zement,
40 bis 85 Gewichts-% anorganische Füllstoffe,
0.5 bis 20 Gewichts-% Pulver umfassend mindestens ein Polymer **P,** wobei das Polymer **P** Epoxidgruppen kovalent gebunden enthält,
0.05 bis 6 Gewichts-% Amin und
0 bis 10 Gewichts-% Zusatzstoffe,
bezogen auf 100 Gewichts-% der trockenen Zusammensetzung.

Dabei wird ein gegebenenfalls vorhandenes anorganisches Trägermaterial, welches zusammen mit dem Amin und/oder dem Pulver umfassend ein Polymer **P** in die Zusammensetzung eingebracht wurde, zu den anorganischen Füllstoffen gezählt.

Die Zusammensetzung ist bei Raumtemperatur ein lagerstabiles rieselfähiges Pulver und/oder Granulat.

Die Zusammensetzung wird bevorzugt durch Mischen der einzelnen Komponenten in einem Trockenmischer hergestellt.

Bevorzugt werden separate pulverförmige Vormischungen zubereitet. Besonders bevorzugt werden eine erste Vormischung, welche die Verbindung enthaltend Epoxidgruppen enthält, und eine zweite Vormischung, welche das Amin enthält, separat hergestellt. Diese Vormischungen werden bevorzugt getrennt voneinander mit den anderen Bestandteilen der Zusammensetzung vermischt.

Eine bevorzugte Vormischung enthält ein Pulver, welches ein Polymer **P** mit kovalent gebundenen Epoxidgruppen und optional noch Trägermaterial und/oder Schutzkolloide umfasst.

Eine weitere bevorzugte Vormischung enthält ein Pulver, welches ein Polymer **P,** ein Epoxidharz und optional ein anorganisches Trägermaterial und/oder Schutzkolloid umfasst.

Besonders bevorzugt wird eine solche Vormischung bereitgestellt durch Sprühtrocknen einer wässrigen Dispersion, die das Polymer **P** mit kovalent gebundenen Epoxidgruppen umfasst, oder durch Sprühtrocknen einer wässrigen Dispersion, die das Polymer **P** und ein Epoxidharz umfasst.

Eine Vormischung, die das Amin enthält, umfasst bevorzugt zusätzlich ein anorganisches Trägermaterial, auf welches das Amin aufgezogen ist und optional ein hydrophobes Polymer, wie vorgängig beschrieben.

Bevorzugt ist ein Prozess zur Herstellung der Zusammensetzung umfassend die Schritte
a) Bereitstellen einer Vormischung durch Sprühtrocknen einer wässrigen Dispersion, umfassend
   - mindestens ein Polymer **P** und
   - mindestens eine Verbindung enthaltend Epoxidgruppen,
   - wobei die mindestens eine Verbindung enthaltend Epoxidgruppen identisch oder unterschiedlich ist mit dem Polymer **P,**
b) Bereitstellen eines Amin-haltigen Pulvers, indem mindestens ein Amin mit mindestens drei gegenüber Epoxidgruppen reaktiven Aminwasserstoffen, gegebenenfalls in Form einer wasserverdünnbaren Aminmischung, auf ein pulverförmiges, anorganisches Trägermaterial aufgebracht wird,
c) Vermischen des Epoxidgruppen-haltigen Pulvers und des Amin-haltigen Pulvers mit den weiteren Inhaltsstoffen der Zusammensetzung.

Zusätzlich kann das Amin-haltige Pulver mit einem hydrophoben Polymer vermischt werden.

Bevorzugt werden dabei zuerst anorganische Füllstoffe, Zement und gegebenenfalls vorhandene weitere Zusatzstoffe vermischt und anschliessend getrennt voneinander die Vormischung enthaltend Epoxidgruppen aus Schritt a) und das Amin-haltige Pulver aus Schritt b) in beliebiger Reihenfolge eingemischt.

Die wässrige Dispersion umfassend das Polymer **P** und ein Epoxidharz wird bevorzugt durch Mischen einer wässrigen Dispersion enthaltend das Polymer **P** mit mindestens einem Epoxidharz erhalten.

Überraschenderweise sind solche Zusammensetzungen gut lagerstabil. Das bedeutet, die Pulver liegen in der Zusammensetzung auch nach längerer Lagerung noch in den Eigenschaften unverändert vor. Bevorzugt ist eine Zusammensetzung, die nach Lagerung von einem Monat, bevorzugt 3 Monaten, noch mehr bevorzugt 6 Monaten oder mehr bei 21°C, nach dem Anmachen mit Wasser vergleichbare Verarbeitungs- und Endeigenschaften aufweist wie die Zusammensetzung frisch nach der Herstellung. Am meisten bevorzugt ist eine Zusammensetzung, die diese Anforderung nach einem Monat, bevorzugt nach 3 Monaten, Lagerung bei 35°C erfüllt.

Ein bevorzugtes Gebinde zum Lagern der Zusammensetzung ist ein Sack, insbesondere ein Papiersack mit innen liegender Kunststofffolie, wobei eine in Papier oder Karton verpackte Zusammensetzung geschützt von flüssigem Wasser, insbesondere geschützt von Regen, gelagert werden muss.

Zur Verarbeitung wird die erfindungsgemässe Zusammensetzung mit Wasser gemischt. Bevorzugt ist eine Wassermenge, die einem W/Z (Gewichtsverhältnis von Wasser und Zement) von 0.30 bis 0.50, bevorzugt 0.35 bis 0.45, entspricht.

Ein weiterer Gegenstand der Erfindung ist ein polymervergüteter Mörtel umfassend die Zusammensetzung und Wasser.

Nach dem Mischen mit Wasser härten die Bestandteile der Zusammensetzung zu einem Feststoff aus. Bei der Aushärtung der Zusammensetzung reagiert der Zement mit dem Wasser in einer komplexen Reaktion zu Zementhydraten, die Verbindung mit Epoxidgruppen reagiert mit dem Amin zu einem zumindest teilvernetzten Polymer, und die Partikel des Polymers **P** bilden einen mindestens teilweise zusammenhängenden Polymerfilm.

Durch die Kombination von Zement, Epoxid-Verbindung, Amin und Polymer wird ein polymervergüteter Mörtel mit guten Endeigenschaften, wie insbesondere hoher Festigkeit, hohe Wasserdichtheit, hoher chemischer Beständigkeit, guter Haftung und rascher Überschichtbarkeit, erhalten.

Überraschenderweise hat die erfindungsgemässe Zusammensetzung nach dem Anmachen mit Wasser und dem Aushärten ähnlich gute Verarbeitungs- und Endeigenschaften wie eine dreikomponentige Vergleichszusammensetzung nach dem Stand der Technik.

Der polymervergütete Mörtel wird bevorzugt als Mauermörtel, Putzmörtel, Reparaturmörtel, Flickmörtel, Flächenspachtel, Estrich, Beschichtung, Korrosionsschutzbeschichtung oder selbstverlaufende Bodenausgleichsmasse für einen nachfolgenden Bodenbelag verwendet.

Der durch Mischen der Zusammensetzung mit Wasser hergestellte Mörtel ist gut verarbeitbar und weist, aufgebracht auf einen Untergrund, beispielsweise Beton, gute Druckfestigkeit und Hafteigenschaften auf. Die Druckfestigkeit beträgt vorteilhaft mehr als 10 MPa nach 24 Stunden Aushärten bei 21°C und 65% relativer Luftfeuchte. Dies ermöglicht eine Belastung der Beschichtung, beispielsweise durch Begehen, ohne diese zu beschädigen.

Die Haftfestigkeit beträgt vorteilhaft mehr als 2 MPa, bevorzugt mehr als 2.5 MPa, nach 7 Tagen gemessen gemäss EN 1542 nach Lagerung bei 21°C und 65% relativer Luftfeuchte.

Die Zusammensetzung erreicht nach dem Mischen mit Wasser und Auftragen auf einen Untergrund, beispielsweise Beton, rasch, bevorzugt nach maximal 24 Stunden, mehr bevorzugt 21 Stunden, eine Oberflächenfeuchte von unter 4 Gewichts-% Wasser. Dadurch kann die Wartezeit bis zum Aufbringen einer Deckschicht, beispielsweise einer Versiegelung mit einer Epoxidharz- oder Polyurethan-basierenden Beschichtung, deutlich verringert werden. Diese Versiegelung oder Beschichtung haftet sehr gut auf dem aufgebrachten Mörtel.

Bevorzugt ist daher ein polymervergüteter Mörtel, der, aufgetragen in einer Schichtdicke im Bereich von 1.5 bis 3 mm auf trockenen Beton und anschliessend entlüftet mit einer Stachelwalze, nach anschliessender Lagerung bei 21°C und 65% relativer Luftfeuchte eine Oberflächenfeuchte von unter 4 Gewichts-% Wasser, gemessen mit einem Tramex CME4 Estrichfeuchte-Messgerät als Mittelwert von 6 Messungen, nach maximal 24 Stunden, bevorzugt nach maximal 21 Stunden, aufweist.

Eine solche Oberfläche ist besonders geeignet für die weitere Beschichtung mit einer auf Epoxidharz oder Polyurethan basierenden Beschichtung. Bevorzugt ist ein polymervergüteter Mörtel, der nach der Auftragen auf einen trockenen Beton wie oben beschrieben, und nach dem Aushärten während 24 Stunden bei 21°C und 65% relativer Luftfeuchte, mit einer auf Epoxidharz oder Polyurethan basierenden Beschichtung beschichtet wird und diese nach 14 Tagen Lagerung bei 21°C und 65% relativer Luftfeuchte eine Haftzugfestigkeit von mehr als 1.5 MPa, bevorzugt von mehr als 2 MPa, aufweist.

Die Zusammensetzung kann nach dem Vermischen mit Wasser in einem Verfahren zum Beschichten, Ausbessern oder Schützen von Bauteilen mit einer erfindungsgemässen einkomponentigen Zusammensetzung wie vorstehend beschrieben verwendet werden, wobei das Verfahren folgende Verfahrensschritte umfasst
a) Mischen der Zusammensetzung mit Wasser
b) Verarbeiten der erhaltenen Mischung durch
   b1) Aufbringen der Mischung auf die Oberfläche eines oder mehrerer Bauteile zur Beschichtung,
   b2) Einbringen der Mischung auf Hohlräume oder Unebenheiten eines Bauteils zum Ausfüllen oder Glätten,
   b3) Aufbringen der Mischung als Korrosionsschutz auf Armierungseisen eines Bauteiles,
c) gegebenenfalls Glätten und/oder Entlüften der auf- bzw. eingebrachten Mischung und
d) Aushärten der Mischung.

Die Verarbeitung der Mischung und die Aushärtung können insbesondere bei Temperaturen im Bereich von 5 bis 35°C erfolgen.

Bei dem Bauteil zur Beschichtung kann es sich um ein Substrat aus einem beliebigen Material handeln, insbesondere die für den Bau üblichen Materialen, wie beispielsweise Beton, Steine, Mauerwerk, Verputz, Glas oder Metall.

Bei dem Bauteil handelt es sich vorzugsweise um einen Boden, beispielsweise aus Beton, Mörtel, Estrich oder Steinen, wobei die Beschichtung aus der erfindungsgemässen Zusammensetzung einen Bodenbelag bildet. Besonders bevorzugt handelt es sich um einen selbstverlaufenden Bodenbelag. Der Boden kann mit einer Grundierung versehen sein. Ferner ist es möglich, auf die aufgebrachte gehärtete Mischung eine Deckschicht als Versiegelung aufzubringen.

Zum Einbringen der Mischung auf die auszufüllenden Hohlräume oder Unebenheiten von Bauteilen kann die erfindungsgemässe einkomponentige Zusammensetzung in üblicher Weise, beispielsweise als Mörtel oder Reparaturmörtel, verwendet werden.

Als Korrosionsschutz kann die erfindungsgemässe einkomponentige Zusammensetzung in üblicher Weise, beispielsweise durch Aufpinseln oder Sprühen auf die Armierung aufgebracht werden.

Ein weiterer Gegenstand der Erfindung ist die Verwendung einer wasserverdünnbaren Aminmischung enthaltend
- mindestens ein Amin-Epoxid-Addukt der Formel (I),
- mindestens ein Amin-Epoxid-Addukt der Formel (II),
- mindestens ein Amin-Epoxid-Addukt der Formel (III) und
- mindestens ein Amin mit zwei primären Aminogruppen, welches frei ist von weiteren Aminogruppen und Ethergruppen, 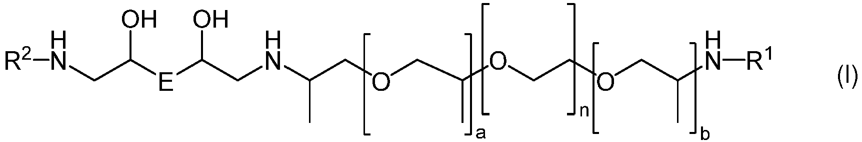 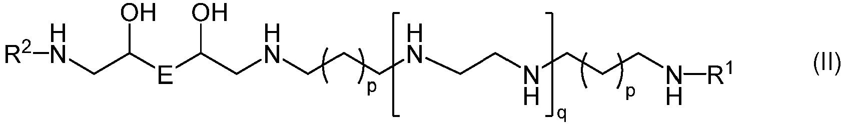 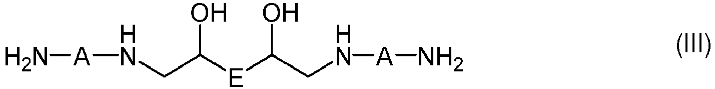 wobei
   a für eine ganze Zahl von 0 bis 10, b für eine ganze Zahl von 1 bis 10, n für eine ganze Zahl von 5 bis 50 und die Summe (a+b) für eine ganze Zahl von 1 bis 10 stehen,
   p für 0 oder 1 und q für 0, 1 ,2 oder 3 steht,
   E für den Rest eines Diepoxids nach Entfernung der beiden Epoxidgruppen steht,
   R¹ für einen einwertigen organischen Rest mit einem Molekulargewicht im Bereich von 15 bis 150 g/mol, insbesondere für Pent-3-en-2-on-4-yl oder Hex-4-en-2-on-5-yl oder Benzyl, steht, R² für einen einwertigen organischen Rest mit einem Molekulargewicht im Bereich von 100 bis 280 g/mol, insbesondere für Octyl, 2-Ethylhexyl, Nonyl, Decyl, C₁₂ bis C₁₈-Alkyl oder C₁₂ bis C₁₈- Alkylaminopropyl, steht, und
   A für einen zweiwertigen organischen Rest mit einem Molekulargewicht im Bereich von 28 bis 500 g/mol, insbesondere für einen Polyoxypropylen-Rest mit einem Molekulargewicht im Bereich von 180 bis 500 g/mol, steht,
   als Bestandteil einer pulverförmigen oder granulatartigen Zusammensetzung umfassend Zement, anorganische Füllstoffe, und ein Pulver umfassend mindestens ein Polymer **P** und mindestens eine Verbindung enthaltend Epoxidgruppen.

Eine solche Zusammensetzung härtet nach dem Vermischen mit Wasser aus, wie vorgängig beschrieben.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. Beschreibung der Messmethoden

Die **Haftfestigkeit** des Prüfmörtels wurde gemäss EN 1542, nach Aufbringen und Aushärten des Prüfmörtels auf einer sandgestrahlten Gartenplatte aus Beton, bestimmt.

Die **Haftfestigkeit** einer Epoxidharz- oder Polyurethan basierenden Beschichtung auf dem Prüfmörtel wurde gemäss EN 1542 bestimmt.

Die **Oberflächenfeuchtigkeit** einer auf einer sandgestrahlten Gartenplatte aus Beton aufgebrachten Beschichtung von 1.5 bis 3 mm Dicke wurde mit einem TRAMEX CME4 Estrichfeuchte-Messgerät (Tramex Ltd. (de), Deutschland) bestimmt. Hierbei wird der Feuchtegehalt mittels einer elektronischen Impedanzmessung ermittelt. Es wurden an der aufgebrachten Beschichtung in regelmässigen Intervallen an 6 unterschiedlichen Punkten Messungen durchgeführt. Als Feuchtegehalt wurde der Mittelwert der 6 Messungen bestimmt. Die Dauer von Auftrag der Beschichtung bis zum Erreichen eines Feuchtegehalts von unter 4 Gewichts-% Wasser wurde so bestimmt.

### 2. Verwendete Materialien

Eine Vormischung A1, bestehend aus 14 Gewichts-% Bisphenol-F-Diglycidylether, 71 Gewichts-% Redispersionspulver auf Basis eines Styrol-Acrylat-Copolymers und 15 Gewichts-% Trägermaterial aus Calciumcarbonat und Silikat, wurde in Form eines rieselfähigen Pulvers mit einem Epoxidwert von 0.86 mmol/g bereitgestellt.

Eine Vormischung B1, bestehend aus Amin, einem Polybutadien und etwa 34 Gewichts-% Silicafume, wurde in Form eines rieselfähigen Pulvers mit einer Aminzahl von 220 mg KOH, bereitgestellt.

Eine Vormischung C1 bestehend aus 62.5 Gewichts-% Quarzsand mit Partikelgrössen im Bereich von 0.1 bis 2.2 mm, 34 Gewichts-% Portlandzement CEM I 52,5, 2.0 Gewichts-% Calciumcarbonat und 1.5 Gewichts-% eines Gemisches aus Verflüssiger, Entschäumer, Schwindreduzierer und Chromatreduzierer wurde bereitgestellt.

Als Referenz wurde Sikafloor^{®}-81 EpoCem^{®}, ein Epoxidharz-vergüteter 3-Komponenten Fliessbelag auf Zementbasis, bestehend aus einer wässrigen, Epoxidharz-haltigen Binderkomponente, einer wässrigen Amin-haltigen Härter-Komponente und einer Pulvermischung, verwendet.

3. Herstellung der erfindungsgemässen Zusammensetzungen und der Vergleichsmischung

### Zusammensetzung Z1

In 1 kg der Vormischung C1 wurden nacheinander 40 g Vormischung A1 und 10 g Vormischung B1 gut eingemischt.

### Zusammensetzung Z2

In 1 kg der Vormischung C1 wurden nacheinander 80 g der Vormischung A1 und 20 g der Vormischung B1 gut eingemischt.

### Zusammensetzung Z3

In 1 kg der Vormischung C1 wurden nacheinander 160 g der Vormischung A1 und 40 g der Vormischung B1 gut eingemischt.

### Vergleichsmischung V1

In 1 kg der Vormischung C1 wurden 36.5 g einer auf 40°C aufgewärmten Mischung aus Bisphenol-A/F-Diglycidylether, Alkylglycidylether und einem Dispergiermittel aufgesprüht und gut eingemischt, wobei ein rieselfähiges Pulver erhalten wurde.

### 4. Lagerbeständigkeit

Proben der Zusammensetzung Z2 und der Vergleichsmischung V1 wurden 1 Monat bei 21°C und 65% relativer Luftfeuchtigkeit, und bei 35°C und 65% relativer Luftfeuchtigkeit in gut verschlossenen Plastikeimern gelagert.

Nach 1 Monat Lagerung wurden in einem Hobart-Mischer 5 kg der Zusammensetzung Z2 mit 800 g Wasser 3 Minuten gemischt.

Beide Mörtel, sowohl der aus der Zusammensetzung Z2 gelagert bei 21°C, als auch der aus der Zusammensetzung Z2 gelagert bei 35°C, liessen sich sehr gut und problemlos verarbeiten.

Die Vergleichsmischung V1 wurde ebenfalls nach der Lagerung geprüft. Dafür wurden jeweils 5 kg der Vergleichsmischung V1 mit 735 g der wässrigen Amin-haltigen Härter-Komponente von Sikafloor^{®}-81 EpoCem^{®} und 112.5 g Wasser für 3 Minuten in einem Hobart-Mischer gemischt.

Der Mörtel aus der Vergleichsmischung V1, die 1 Monat bei 21°C gelagert worden war, liess sich problemlos verarbeiten.

Der Mörtel aus der Vergleichsmischung V1, die 1 Monat bei 35°C gelagert worden war, konnte wegen seiner zähen und klebrigen Konsistenz nicht mehr korrekt verarbeitet werden.

### 5. Verwendung der Zusammensetzungen bzw. Herstellen der Mörtel

Es wurden jeweils 5000 g der erfindungsgemässen Zusammensetzungen Z1, Z2 und Z3 beziehungsweise der Vormischung C1 mit 800 g Wasser für 3 Minuten in einem Hobart-Mischer gemischt.

Für die Referenzmischung 1 wurde Sikafloor^{®}-81 EpoCem^{®} verwendet. Im Mischgefäss eines Hobart-Mischers wurden die Epoxidharz enthaltende Binderkomponente und die Amin-enthaltende Härterkomponente miteinander vermischt. Anschliessend wurde unter Rühren die pulverförmige Komponente zugegeben und es wurde weitere 3 Minuten gemischt, bis eine homogene Mischung entstanden war.

Eine sandgestrahlte Gartenplatte aus Beton wurde mit den Mörteln in einer Schichtdicke von 1.5 bis 3 mm beschichtet und die frische Beschichtung mit einer Stachelwalze entlüftet. Die beschichtete Gartenplatte wurde bei 21°C und 65% rel. Luftfeuchte gelagert. Ab 10 Stunden nach Aufbringen der Beschichtung wurde die Oberflächenfeuchte stündlich gemessen. Die Haftfestigkeit der Beschichtung wurde nach 2 und nach 28 Tagen bestimmt.

Die Eigenschaften der Frischmörtel und der Beschichtungen sind in Tabelle 1 angegeben.

**Tabelle 1**

| | Referenz-Beispiel 1 | Beispiel 1 | Beispiel 2 |
|---|---|---|---|
| Mörtelbasis | Sikafloor^{®}-81 EpoCem^{®} | Zusammensetzung Z1 | Zusammensetzung Z2 |
| Verarbeitbarkeit | sehr gut | sehr gut | sehr gut |
| Erreichen der Oberflächenfeuchte von <4% [h] | 21 | 17 | 19 |
| Haftfestigkeit nach 7 Tagen [MPa] | 3.0 | 3.4 | 2.8 |
| Haftfestigkeit nach 28 Tagen [MPa] | 3.6 | 3.8 | 3.2 |

| | | | |
|---|---|---|---|
| n. g.: wurde nicht gemessen | | | |

### 6. Haftung einer Versiegelungsschicht auf der Mörtelbeschichtung

Eine sandgestrahlte trockene Gartenplatte aus Beton wurde mit den Frischmörteln in einer Schichtdicke von 1.5 bis 3 mm beschichtet, die frische Beschichtung mit einer Stachelwalze entlüftet und die beschichtete Gartenplatte 24 Stunden bei 21°C und 65% relativer Luftfeuchte gelagert. Anschliessend wurde als Beschichtung Sikafloor^{®} 160 EP (Epoxidharz-Beschichtung, von Sika), beziehungsweise Sikafloor^{®} 359 PU (Polyurethanbeschichtung, von Sika), aufgebracht. Nach 14 Tagen Lagerung bei 21°C und 65% relativer Luftfeuchte wurde die Haftung der aufgebrachten Beschichtung auf dem Mörteluntergrund bestimmt. Die Resultate sind in Tabelle 2 und Tabelle 3 angeführt.

**Tabelle 2: Haftfestigkeit von Sikafloor^{®} 160 EP nach 14 Tagen.**

| | Referenz-Beispiel 2 | Referenz-Beispiel 3 | Beispiel 3 | Beispiel 4 |
|---|---|---|---|---|
| Mörtelbasis | 3-Komponenten-System | Vormischung C1 | Zusammensetzung Z2 | Zusammensetzung Z3 |
| Haftfestigkeit [MPa] | 3.6 | keine Haftung | 2.2 | 3.1 |

**Tabelle 3: Haftfestigkeit von Sikafloor^{®} 359 PU nach 14 Tagen**

| | Referenz-Beispiel 4 | Referenz-Beispiel 5 | Beispiel 5 | Beispiel 6 |
|---|---|---|---|---|
| Mörtelbasis | 3-Komponenten-System | Vormischung C1 | Zusammensetzung Z2 | Zusammensetzung Z3 |
| Haftfestigkeit [MPa] | 3.1 | keine Haftung | 2.8 | 3.0 |

## Patentansprüche

1. Zusammensetzung umfassend
- mindestens einen Zement,
- mindestens einen anorganischen Füllstoff,
- mindestens ein Pulver umfassend mindestens ein Polymer **P,**
- mindestens eine Verbindung enthaltend Epoxidgruppen,
- wobei die mindestens eine Verbindung enthaltend Epoxidgruppen identisch oder unterschiedlich ist mit dem Polymer **P,** und
- mindestens ein Amin mit mindestens drei gegenüber Epoxidgruppen reaktiven Aminwasserstoffen,
**dadurch gekennzeichnet, dass** die Zusammensetzung mehr als 10 Gewichts-% Zement enthält und bei Raumtemperatur als lagerstabiles rieselfähiges Pulver und/oder Granulat vorliegt,
wobei das Amin mit mindestens drei gegenüber Epoxidgruppen reaktiven Aminwasserstoffen ein wasserverdünnbares Amin oder ein Bestandteil einer wasserverdünnbaren Aminmischung ist,
wobei lagerstabil bedeutet, dass die Zusammensetzung bei Lagerung über einen Zeitraum von mindestens einem Monat, bevorzugt mindestens 3 bis zu 6 Monaten und länger, in einem geeigneten Gebinde bei bestimmungsgemässer Verwendung ohne Einschränkungen anwendbar bleibt, und wobei unter Raumtemperatur einer Temperatur von 21 °C verstanden wird.

2. Zusammensetzung gemäss Anspruch 1, **dadurch gekennzeichnet, dass** das Polymer **P** ein Copolymer enthaltend die Monomerbausteine Styrol und Acrylester, insbesondere Styrol und Butylacrylat, umfasst.

3. Zusammensetzung gemäss einem der vorhergehenden Ansprüche, **dadurch gekennzeichnet, dass** sie 0.5 bis 20, bevorzugt in 2.5 bis 18, mehr bevorzugt 3.2 bis 15, Gewichts-% Polymer **P** enthält.

4. Zusammensetzung gemäss einem der Ansprüche 1 bis 3, **dadurch gekennzeichnet, dass** die Verbindung enthaltend Epoxidgruppen identisch mit dem Polymer **P** ist und ein Copolymer mit kovalent gebundenen Epoxidgruppen darstellt.

5. Zusammensetzung gemäss einem der Ansprüche 1 bis 3, **dadurch gekennzeichnet, dass** die Verbindung enthaltend Epoxidgruppen nicht identisch mit dem Polymer **P** ist und ein Epoxidharz darstellt.

6. Zusammensetzung gemäss Anspruch 5, **dadurch gekennzeichnet, dass** das Epoxidharz in einer innigen Mischung mit dem Polymer **P,** vorliegt.

7. Zusammensetzung gemäss Anspruch 1, **dadurch gekennzeichnet, dass** sie eine wasserverdünnbare Aminmischung enthält, welche mindestens ein Amin-Epoxid-Addukt mit mindestens drei Aminwasserstoffen umfasst.

8. Zusammensetzung gemäss einem der vorhergehenden Ansprüche, **dadurch gekennzeichnet, dass** das Amin auf einem anorganischen Trägermaterial aufgebracht vorliegt.

9. Zusammensetzung gemäss einem der Ansprüche 1, 2 und 4 bis 8, **dadurch gekennzeichnet, dass** die Zusammensetzung
11 bis 45 Gewichts-% Zement,
40 bis 85 Gewichts-% anorganische Füllstoffe,
0.5 bis 20 Gewichts-% Pulver umfassend ein Polymer **P,**
0.1 bis 7 Gewichts-% Epoxidharz,
0.05 bis 6 Gewichts-% Amine und
0 bis 10 Gewichts-% weitere Zusatzstoffe
enthält.

10. Prozess zur Herstellung der Zusammensetzung gemäss einem der vorhergehenden Ansprüche, umfassend die Schritte
a) Bereitstellen einer Vormischung durch Sprühtrocknen einer wässrigen Dispersion, umfassend
- mindestens ein Polymer **P** und
- mindestens eine Verbindung enthaltend Epoxidgruppen,
- wobei die mindestens eine Verbindung enthaltend Epoxidgruppen identisch oder unterschiedlich ist mit dem Polymer **P**,
b) Bereitstellen eines Amin-haltigen Pulvers, indem mindestens ein Amin mit mindestens drei gegenüber Epoxidgruppen reaktiven Aminwasserstoffen, in Form einer wasserverdünnbaren Aminmischung, auf ein pulverförmiges, anorganisches Trägermaterial aufgebracht wird,
c) Vermischen des Epoxidgruppen-haltigen Pulvers und des Amin-haltigen Pulvers mit den weiteren Inhaltsstoffen der Zusammensetzung.

11. Polymervergüteter Mörtel umfassend die Zusammensetzung gemäss einem der Ansprüche 1 bis 9 und Wasser.

12. Verwendung des polymervergüteten Mörtels gemäss Anspruch 11 als Mauermörtel, Putzmörtel, Reparaturmörtel, Flickmörtel, Flächenspachtel, Estrich, Beschichtung, Korrosionsschutzbeschichtung oder selbstverlaufende Bodenausgleichsmasse für einen nachfolgenden Bodenbelag.

13. Polymervergüteter Mörtel gemäss Anspruch 11, **dadurch gekennzeichnet, dass** er aufgetragen in einer Schichtdicke im Bereich von 1.5 bis 3 mm auf trockenen Beton und anschliessend entlüftet mit einer Stachelwalze, nach anschliessender Lagerung bei 21°C und 65% relativer Luftfeuchte eine Oberflächenfeuchte von unter 4 Gewichts-% Wasser, gemessen mit einem Tramex CME4 Estrichfeuchte-Messgerät, als Mittelwert von 6 Messungen, nach maximal 24 Stunden, bevorzugt nach maximal 21 Stunden, aufweist.

## Claims

1. Composition comprising
- at least one cement,
- at least one inorganic filler,
- at least one powder comprising at least one polymer **P**,
- at least one compound containing epoxy groups,
- wherein the at least one compound containing epoxy groups is identical or different to the polymer **P** and
- at least one amine having at least three epoxy-reactive amine hydrogens,
**characterized in that** the composition contains more than 10% by weight of cement and at room temperature is in the form of a storage-stable free-flowing powder and/or granulate,
wherein the amine having at least three epoxy-reactive amine hydrogens is a water-dilutable amine or a constituent of a water-dilutable amine mixture,
wherein storage-stable is to be understood as meaning that if correctly used the composition remains usable without limitations upon storage in a suitable container over a period of at least one month, preferably at least 3 to 6 months or longer and wherein room temperature is to be understood as meaning a temperature of 21°C.

2. Composition according to Claim 1, **characterized in that** the polymer **P** is a copolymer comprising the monomer units styrene and acrylic ester, in particular styrene and butyl acrylate.

3. Composition according to either of the preceding claims, **characterized in that** it contains 0.5% to 20% by weight, preferably 2.5% to 18% by weight, more preferably 3.2% to 15% by weight, of polymer **P**.

4. Composition according to any of Claims 1 to 3, **characterized in that** the compound containing epoxy groups is identical to the polymer **P** and is a copolymer having covalently bonded epoxy groups.

5. Composition according to any of Claims 1 to 3, **characterized in that** the compound containing epoxy groups is not identical to the polymer **P** and is an epoxy resin.

6. Composition according to Claim 5, **characterized in that** the epoxy resin is in an intimate mixture with the polymer **P**.

7. Composition according to Claim 1, **characterized in that** it contains a water-dilutable amine mixture comprising at least one amine-epoxide adduct having at least three amine hydrogens.

8. Composition according to any of the preceding claims, **characterized in that** the amine has been applied to an inorganic carrier material.

9. Composition according to any of Claims 1, 2 and 4 to 8, **characterized in that** the composition contains
11% to 45% by weight of cement,
40% to 85% by weight of inorganic fillers,
0.5% to 20% by weight of powder comprising a polymer **P**,
0.1% to 7% by weight of epoxy resin,
0.05% to 6% by weight of amines and
0% to 10% by weight of further additives.

10. Process for producing the composition according to any of the preceding claims comprising the steps of
a) providing a premixture by spray drying an aqueous dispersion comprising
- at least one polymer **P** and
- at least one compound containing epoxy groups,
- wherein the at least one compound containing epoxy groups is identical or different to the polymer **P**,
b) providing an amine-containing powder by applying an amine having at least three epoxy-reactive amine hydrogens in the form of a water-dilutable amine mixture to a pulverulent, inorganic support material,
c) mixing the epoxy-containing powder and the amine-containing powder with the further ingredients of the composition.

11. Polymer-modified mortar comprising the composition according to any of Claims 1 to 9 and water.

12. Use of the polymer-modified according to Claim 11 as masonry mortar, render mortar, repair mortar, patching mortar, troweling composition, screed, coating, anticorrosion coating or self-leveling floor leveling composition for a subsequent floor covering.

13. Polymer-modified mortar according to Claim 11, **characterized in that** when applied in a layer thickness in the range from 1.5 to 3 mm to dry concrete and subsequently deaerated by means of a spiked roller and subsequently being stored at 21°C and 65% relative atmospheric humidity it attains a surface moisture content of less than 4% by weight of water, measured using a Tramex CME4 screed moisture measuring instrument as an average of 6 measurements, after not more than 24 hours, preferably after not more than 21 hours.

## Revendications

1. Composition comprenant
- au moins un ciment,
- au moins une charge inorganique,
- au moins une poudre comprenant au moins un polymère P,
- au moins un composé contenant des groupes époxyde,
- l'au moins un composé contenant des groupes époxyde étant identique ou différent du polymère P, et
- au moins une amine comportant au moins trois hydrogènes d'amine réactifs vis-à-vis de groupes époxyde,
**caractérisée en ce que** la composition contient plus de 10 % en poids de ciment et est présente à température ambiante en tant que poudre et/ou granulé stable au stockage pouvant s'écouler,
l'amine comportant au moins trois hydrogènes d'amine réactifs vis-à-vis de groupes époxyde étant une amine pouvant être diluée dans l'eau ou un ingrédient d'un mélange d'amines pouvant être dilué dans l'eau,
les termes « stable au stockage » signifiant que la composition reste applicable sans restriction pour l'utilisation prévue en cas de stockage sur une durée d'au moins un mois, préférablement d'au moins 3 à 6 mois et plus, dans un récipient approprié, et dans laquelle par température ambiante, on entend une température de 21 °C.

2. Composition selon la revendication 1, **caractérisée en ce que** le polymère P comprend un copolymère contenant les motifs monomériques de styrène et d'ester d'acrylate, en particulier le styrène et l'acrylate de butyle.

3. Composition selon l'une quelconque des revendications précédentes, **caractérisée en ce qu'**elle contient 0,5 à 20, préférablement 2,5 à 18, plus préférablement 3,2 à 15 % en poids de polymère P.

4. Composition selon l'une quelconque des revendications 1 à 3, **caractérisée en ce que** le composé contenant des groupes époxyde est identique au polymère P et représente un copolymère doté de groupes époxyde liés de manière covalente.

5. Composition selon l'une quelconque des revendications 1 à 3, **caractérisée en ce que** le composé contenant des groupes époxyde n'est pas identique au polymère P et est une résine époxy.

6. Composition selon la revendication 5, **caractérisée en ce que** la résine époxy est présente dans un mélange intime avec le polymère P.

7. Composition selon la revendication 1, **caractérisée en ce qu'**elle contient un mélange d'amine pouvant être dilué dans l'eau, qui comprend au moins un adduit amine-époxyde comportant au moins trois hydrogènes d'amine.

8. Composition selon l'une quelconque des revendications précédentes, **caractérisée en ce que** l'amine est présente de manière appliquée sur un matériau de support inorganique.

9. Composition selon l'une quelconque des revendications 1, 2 et 4 à 8, **caractérisée en ce que** la composition contient
11 à 45 % en poids de ciment,
40 à 85 % en poids de charges inorganiques,
0,5 à 20 % en poids de poudre comprenant un polymère P, 0,1 à 7 % en poids de résine époxy,
0,05 à 6 % en poids d'amines et
0 à 10 % en poids d'autres additifs.

10. Procédé de préparation de la composition selon l'une quelconque des revendications précédentes, comprenant les étapes de
a) mise à disposition d'un prémélange par séchage par pulvérisation d'une dispersion aqueuse, comprenant
- au moins un polymère P et
- au moins un composé contenant des groupes époxyde,
- l'au moins un composé contenant des groupes époxyde étant identique ou différent du polymère P,
b) mise à disposition d'une poudre contenant une amine en appliquant au moins une amine comportant au moins trois hydrogènes d'amine réactifs vis-à-vis de groupes époxyde sous la forme d'un mélange d'amines pouvant être dilué dans l'eau sur un matériau de support inorganique sous forme de poudre,
c) mélange de la poudre contenant des groupes époxyde et de la poudre contenant une amine avec d'autres ingrédients de la composition.

11. Mortier amélioré par un polymère comprenant la composition selon l'une quelconque des revendications 1 à 9 et de l'eau.

12. Utilisation du mortier amélioré par un polymère selon la revendication 11 en tant que mortier de maçonnerie, mortier de crépi, mortier de réparation, mortier de resurfaçage, enduit de surface, chape, revêtement, revêtement de protection contre la corrosion ou masse d'égalisation de sol autonivelante pour un revêtement de sol ultérieur.

13. Mortier amélioré par un polymère selon la revendication 11, **caractérisé en ce qu'**il présente, lorsqu'il est appliqué en une épaisseur de couche dans la plage de 1,5 à 3 mm sur du béton sec et ultérieurement désaéré avec un cylindre à dents, après stockage ultérieur à 21 °C et 65 % d'humidité relative de l'air, une humidité de surface de moins de 4 % en poids d'eau, mesurée avec un appareil de mesure d'humidité de chape Tramex CME4, comme moyenne de 6 mesures, après maximum 24 heures, préférablement après maximum 21 heures.
